# DEMANDE DE BREVET EUROPEEN

(11) **EP 4 354 043 A1**
(43) Date de publication de la demande: **17.04.2024**
(21) Numéro de dépôt: 23203019.7
(22) Date de dépôt: 11.10.2023
(51) Int. Cl.: F24S 10/70, F24S 23/74, F24S 23/77, F24S 23/79, F24S 23/70, F24S 50/20

(54) **COLLECTEUR SOLAIRE COMPORTANT UNE PLURALITÉ DE MIROIRS EN ÉVENTAIL**

(30) Priorité: 11.10.2022 FR 2210384
(71) Demandeur: Commissariat à l'énergie atomique et aux énergies alternatives, 75015 Paris (FR); Université Savoie Mont Blanc, 73011 Chambéry Cedex (FR)
(72) Inventeur: KAMERLING, Simon, 73000 BASSENS (FR); ALBERT, Raphaël, 38054 GRENOBLE CEDEX 09 (FR)
(74) Mandataire: Brevalex

(57) **Abrégé**

L'objet principal de l'invention est un collecteur solaire (1), comportant : une pluralité de miroirs (2) pour la réflexion solaire, formant un concentrateur primaire, une structure de support (3) sur laquelle les miroirs (2) sont montés, et une structure de réception d'un flux de lumière concentré (4, 5), destinée à recevoir et absorber les rayons lumineux réfléchis par les miroirs (2), caractérisé en ce que la structure de réception d'un flux de lumière concentré (4, 5) est située sous les miroirs (2) et en ce que les miroirs (2) sont disposés en éventail d'axe central (C) avec une orientation de la face réfléchissante vers l'intérieur de sorte à focaliser les rayons lumineux vers la structure de réception d'un flux de lumière concentré (4, 5).

## Description

### DOMAINE TECHNIQUE

La présente invention se rapporte au domaine général des installations (ou centrales) solaires, et plus spécifiquement à la conception d'un nouveau type de collecteur solaire présent dans de telles installations.

De façon privilégiée, l'invention s'applique au domaine du solaire thermique à concentration (ou encore domaine du « CSP » pour « Concentrated Solar Power » anglais), notamment au domaine du solaire thermique à concentration intégré au bâtiment (ou encore domaine du « BI-CSP » pour « Building Integrated Concentrated Solar Power »), et plus précisément encore au domaine des systèmes solaires à concentration linéaire tels que les collecteurs linéaires de Fresnel et les collecteurs cylindro-paraboliques à foyer linéaire. En particulier, l'invention peut être mise en oeuvre pour la production de chaleur pour l'habitat et/ou pour l'industrie.

L'invention propose ainsi un collecteur solaire comportant une pluralité de miroirs en éventail, ainsi qu'une centrale solaire comportant un tel collecteur solaire.

### ÉTAT DE LA TECHNIQUE ANTÉRIEURE

Dans le domaine de l'énergie solaire, il existe des collecteurs solaires de différentes natures. Ceux-ci sont utilisés pour concentrer le rayonnement solaire sur des récepteurs de haut flux, de plusieurs dizaines de kilowatts à quelques mégawatts par mètre carré, afin de produire de la chaleur et/ou de l'électricité.

Ainsi, parmi les technologies connues de la filière du solaire thermodynamique, il existe la technologie du solaire thermique à concentration (CSP) qui utilise des miroirs pour concentrer le rayonnement solaire sur une petite surface. La technologie CSP consiste plus précisément à utiliser le rayonnement solaire pour chauffer un fluide caloporteur servant de source chaude dans un cycle thermodynamique. La concentration permet d'atteindre des températures plus ou moins élevées, et ainsi de bénéficier de rendements de conversion thermodynamique plus ou moins importants. Les techniques développées autour de la technologie CSP se distinguent par leur méthode de concentration des rayons solaires, leur méthode de transport, et éventuellement de stockage, de la chaleur, notamment par le biais d'un ou plusieurs fluides caloporteurs, et leur méthode de conversion thermodynamique, par exemple par le biais de turbines à vapeur, de turbines à gaz, de moteurs du type Stirling, entre autres.

On rencontre ainsi typiquement quatre familles principales de systèmes solaires à concentration appartenant à la technologie CSP, à savoir : les collecteurs cylindro-paraboliques à foyer linéaire, les collecteurs linéaires de Fresnel, les centrales à tour à récepteur central, et les collecteurs paraboliques à foyer mobile.

Les collecteurs cylindro-paraboliques et les collecteurs linéaires de Fresnel constituent des systèmes solaires à concentration linéaire, tandis que les centrales à tour et les collecteurs paraboliques constituent des systèmes solaires à concentration ponctuelle. Par ailleurs, les centrales à tour et les collecteurs linéaires de Fresnel constituent des systèmes solaires à concentration avec récepteurs fixes, tandis que les collecteurs paraboliques et les collecteurs cylindro-paraboliques constituent des systèmes solaires à concentration avec récepteurs mobiles.

Un élément clé de tels systèmes solaires à concentration est le champ de réflecteurs primaires. Par exemple, dans le cas des collecteurs linéaires de Fresnel (technologie CLFR pour « Compact Linear Fresnel Reflector » en anglais), le champ de réflecteurs primaires, en suivant la course du soleil d'est en ouest au cours d'une journée, reçoit les rayons lumineux directs et les réfléchit en direction du récepteur fixe. Le facteur de concentration pour de tels collecteurs linéaires de Fresnel est typiquement de l'ordre de 50, ce qui signifie que le flux solaire au récepteur est égal à environ 50 fois le flux solaire qui impacte le sol.

Dans l'ensemble de ces technologies, les réflecteurs solaires ont pour fonction de réfléchir et de concentrer l'ensemble de l'irradiation solaire directe incidente vers le récepteur, situé à quelques mètres ou quelques dizaines de mètres des réflecteurs. Ils sont composés d'un miroir assemblé à une structure montée sur des systèmes de rotation suivant un ou deux axes permettant de suivre la course du soleil au cours de la journée.

Dans ces technologies classiques, en particulier celles des collecteurs cylindro-paraboliques et des collecteurs linéaires de Fresnel, la défocalisation est réalisée vers le ciel.

On connaît en outre des publications « Construction of a 100 KW Solar Thermal-Electric Experimental Plant», Boy-Marcotte, J.L. et al, Journal of Solar Energy Engineering, 1985, 107, 196-201, « Parametric Analysis of the Fixed Mirror Solar Concentrator for Medium Température Applications », Pujol-Nadal, R. et al, Journal of Solar Energy Engineering 2014, 136, 011019, et « Optical Characterization of a Fixed Mirror Solar Concentrator Prototype by the Ray-Tracing Procedure », Pujol-Nadal, R. et al, Journal of Renewable and Sustainable Energy 2014, 6, 043105, des principes de réflexion vers le haut en direction d'un récepteur se déplaçant, avec ainsi une certaine emprise au vent et des miroirs orientés vers le haut.

Il existe un premier besoin d'éviter le mouvement des miroirs pour réduire les coûts élevés liés à leurs dimensionnements mécaniques et leurs mouvements, ces derniers étant soumis à de fortes contraintes liées au vent. Cela implique donc de réfléchir à des systèmes à miroirs fixes.

Dans ces technologies à miroirs fixes, Il existe un besoin de protéger le récepteur en mouvement des contraintes mécaniques liées au vent, ainsi qu'avoir une défocalisation vers le sol pour éviter tout rejet de rayons dans tous les sens, et parvenir à une maintenance plus simple sur le récepteur.

### EXPOSÉ DE L'INVENTION

L'invention a pour but de remédier au moins partiellement aux besoins mentionnés ci-dessus et aux inconvénients relatifs aux réalisations de l'art antérieur.

En particulier, l'invention vise à concevoir un nouveau type de collecteur solaire permettant une focalisation vers le bas, la concentration de lumière étant réalisée sous les miroirs.

L'invention a ainsi pour objet, selon l'un de ses aspects, un collecteur solaire, comportant :
- une pluralité de miroirs pour la réflexion solaire, formant un concentrateur primaire,
- une structure de support sur laquelle les miroirs sont montés,
- une structure de réception d'un flux de lumière concentré, destinée à recevoir et absorber les rayons lumineux réfléchis par les miroirs, caractérisé en ce que la structure de réception d'un flux de lumière concentré est située sous les miroirs et en ce que les miroirs sont disposés en éventail d'axe central avec une orientation de la face réfléchissante vers l'intérieur de sorte à focaliser les rayons lumineux vers la structure de réception d'un flux de lumière concentré.

Le collecteur solaire selon l'invention peut en outre comporter l'une ou plusieurs des caractéristiques suivantes prises isolément ou suivant toutes combinaisons techniques possibles.

La structure de réception d'un flux de lumière concentré peut être de différents types.

La structure de réception d'un flux de lumière concentré peut notamment comporter :
- un concentrateur secondaire destiné à recevoir, notamment à reconcentrer, les rayons lumineux réfléchis par les miroirs,
- un tube récepteur relié au concentrateur secondaire, notamment situé à la focale du concentrateur secondaire, pour absorber le flux solaire concentré et permettant le passage d'un fluide caloporteur.

Le concentrateur secondaire peut être situé sous les miroirs et les miroirs peuvent être disposés en éventail d'axe central avec une orientation de la face réfléchissante vers l'intérieur de sorte à focaliser les rayons lumineux vers le concentrateur secondaire.

En variante, la structure de réception d'un flux de lumière concentré peut comporter une structure photovoltaïque, comme un ensemble de cellules photovoltaïques, ou encore un tube récepteur de largeur équivalente à celle d'un concentrateur secondaire.

La structure de support peut comporter une structure porteuse fixe et une structure d'accroche des miroirs, portée par la structure porteuse, notamment de forme circulaire.

La structure d'accroche peut être fixe, et alors le concentrateur secondaire et le tube récepteur sont mobiles en rotation.

Le concentrateur secondaire et le tube récepteur peuvent être fixes par rapport à la structure d'accroche, et l'ensemble peut tourner par rapport à la structure porteuse. Cette possibilité nécessite un mouvement quotidien de la structure d'accroche par le biais par exemple d'un gros moteur.

Le concentrateur secondaire et le tube récepteur peuvent encore être mobiles en rotation pour suivre la course du soleil, et la structure d'accroche peut être mise en rotation de manière saisonnière et manuellement de façon à optimiser la collecte de l'énergie.

De plus, la structure de réception d'un flux de lumière concentré peut être portée par la structure d'accroche, notamment de façon diamétralement opposée aux miroirs. En particulier, le concentrateur secondaire peut être porté par la structure d'accroche, notamment de façon diamétralement opposée aux miroirs.

La structure de support peut comporter un support de maintien des miroirs solidarisant tous les miroirs entre eux, s'étendant notamment en partie médiane des miroirs.

Le tube récepteur peut, le cas échéant, être monté mobile en rotation sur l'axe central de l'éventail.

En outre, chaque miroir peut comporter une face pourvue d'un miroir orientée vers l'axe central de l'éventail.

Une première moitié des miroirs peut présenter des faces pourvues de miroirs orientées vers un côté du plan médian passant par l'axe central de l'éventail, et une deuxième moitié des miroirs peut présenter des faces pourvues de miroirs orientées vers l'autre côté du plan médian.

Les miroirs peuvent être de forme sensiblement rectangulaire.

En outre, l'invention a aussi pour objet, selon un autre de ses aspects, une centrale solaire, caractérisée en ce qu'elle comporte une pluralité de collecteurs solaires tels que définis précédemment.

Le collecteur solaire et la centrale solaire selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
[Fig. 1] représente, selon une vue en coupe, un exemple de réalisation d'un collecteur solaire conforme à l'invention, et
[Fig. 2] représente, selon une vue en perspective, l'exemple de réalisation de la figure 1.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### DESCRIPTION DES MODES DE REALISATION

Dans la description de l'exemple de mise en oeuvre de l'invention qui va suivre, le domaine d'application concerné est celui des installations solaires thermiques à concentration.

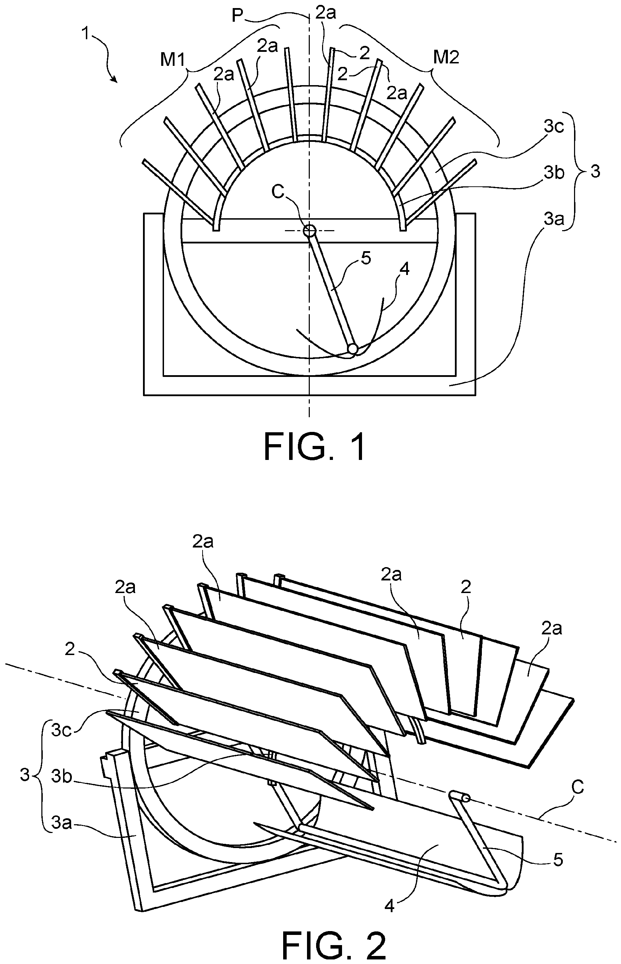

En référence à la figure 1, on a représenté, en coupe, un exemple de réalisation d'un collecteur solaire 1 conforme à l'invention, et la figure 2 représente, en perspective, l'exemple de réalisation de la figure 1.

Le collecteur solaire 1 comporte une pluralité de miroirs 2 pour la réflexion solaire, formant un concentrateur primaire, et une structure de support 3 sur laquelle les miroirs 2 sont montés.

De plus, une structure de réception d'un flux de lumière concentré 4, 5 est présente. Ici, il s'agit d'un concentrateur secondaire 4 destiné à recevoir les rayons lumineux réfléchis par les miroirs 2 qui se situe sous les miroirs 2. Les miroirs 2 sont avantageusement disposés en éventail présentant un axe central C avec une orientation de la face réfléchissante vers l'intérieur de sorte à focaliser les rayons lumineux vers le concentrateur secondaire 4. La disposition des miroirs 2 forme ainsi un « hérisson » de miroirs orientés de telle manière à rediriger les rayons réfléchis vers le concentrateur secondaire 4 pour réaliser la concentration solaire.

Chaque miroir 2 est de forme sensiblement rectangulaire. De plus, il présente une face pourvue d'un miroir 2a orientée vers l'axe central C de l'éventail. Précisément, une première moitié M1 des miroirs 2 présente des faces pourvues de miroirs 2a orientées vers un côté du plan médian P passant par l'axe central C de l'éventail, et une deuxième moitié M2 des miroirs 2 présente des faces pourvues de miroirs 2a orientées vers l'autre côté du plan médian P.

Par ailleurs, la structure de support 3 comporte une structure porteuse fixe 3a, destinée par exemple à être solidarisée à une toiture et/un mur et permettant de garantir la solidité du collecteur solaire 1.

Une structure d'accroche 3c des miroirs 2, portée par la structure porteuse 3a, notamment de forme circulaire, est prévue. Elle peut être mobile en rotation par rapport à la structure porteuse 3a.

Le concentrateur secondaire 4 est porté par le tube récepteur 5, notamment de façon diamétralement opposée aux miroirs 2.

Les miroirs 2 peuvent avantageusement être des miroirs plans. Toutefois, d'autres formes sont également possibles, notamment des miroirs courbes.

Les miroirs 2 sont avantageusement disposés en éventail formant un arc de cercle, ou une forme sensiblement en arc de cercle proche d'une ellipse, voire encore sous tout autre forme techniquement possible.

En outre, la structure de support 3 peut comporter un support de maintien 3b des miroirs 2 solidarisant tous les miroirs 2 entre eux, s'étendant notamment en partie médiane des miroirs 2.

De plus, un tube récepteur 5 relié au concentrateur secondaire 4 est prévu et permet le passage d'un fluide caloporteur. Ce tube récepteur 5 peut être monté mobile en rotation sur l'axe central C de l'éventail.

En cours de fonctionnement, les miroirs 2 peuvent être fixes et le tube récepteur 5 peut être mobile, en déplacement autour de l'axe central C.

En variante, le tube récepteur 5 peut être maintenu fixe par rapport aux miroirs 2, et l'ensemble formé par les miroirs 2 et le tube récepteur 5 peut être entraîné en rotation. Ainsi, la structure d'accroche 3c se déplace par rapport à la structure porteuse 3a.

En variante encore, le tube récepteur 5 peut être mobile et les miroirs 2 peuvent être fixes avec toutefois la possibilité de les orienter manuellement en fonction de la position du soleil, par exemple de manière saisonnière.

Le concentrateur secondaire 4 peut être notamment de type « CPC » pour « Compound Parabolic Concentrator » en anglais. Un tel exemple de concentrateur est par exemple connu de la publication « Solar Concentrators with Maximal Concentration for Cylindrical Absorbers », Rabl, A., Appl. Opt. 1976, 15, 1871.

Grâce à un tel collecteur solaire 1, le flux solaire concentré peut être défocalisé vers le bas. De plus, les pertes thermiques sont faibles : ainsi, remplacer le fluide caloporteur, notamment de l'eau, proche du point de gel par de l'eau à température légèrement supérieure par le biais d'une recirculation peut permettre d'éviter le gel. On peut alors se raccorder par exemple à un ballon d'eau chaude classique, sans avoir recours à de l'eau glycolée.

Un tel collecteur solaire 1 conforme à l'invention a été simulé à l'aide du logiciel SolTrace^{®} qui a permis de montrer que les miroirs 2 doivent avantageusement présenter un angle transversal inférieur à 40° par rapport à la verticale, avec préférentiellement un nombre de miroirs de 11 et une largeur de 0,5 m pour chaque miroir.

Bien entendu, l'invention n'est pas limitée à l'exemple de réalisation qui vient d'être décrit. Diverses modifications peuvent y être apportées par l'homme du métier.

## Revendications

1. Collecteur solaire (1), comportant :
- une pluralité de miroirs (2) pour la réflexion solaire, formant un concentrateur primaire,
- une structure de support (3) sur laquelle les miroirs (2) sont montés,
- une structure de réception d'un flux de lumière concentré (4, 5), destinée à recevoir et absorber les rayons lumineux réfléchis par les miroirs (2), **caractérisé en ce que** la structure de réception d'un flux de lumière concentré (4, 5) est située sous les miroirs (2) et **en ce que** les miroirs (2) sont disposés en éventail d'axe central (C) avec une orientation de la face réfléchissante vers l'intérieur de sorte à focaliser les rayons lumineux vers la structure de réception d'un flux de lumière concentré (4, 5).

2. Collecteur solaire selon la revendication 1, **caractérisé en ce que** la structure de réception d'un flux de lumière concentré (4, 5) comporte :
- un concentrateur secondaire (4) destiné à recevoir les rayons lumineux réfléchis par les miroirs (2),
- un tube récepteur (5) relié au concentrateur secondaire (4) pour absorber le flux solaire concentré et permettant le passage d'un fluide caloporteur, le concentrateur secondaire (4) étant situé sous les miroirs (2) et les miroirs (2) étant disposés en éventail d'axe central ^{©} avec une orientation de la face réfléchissante vers l'intérieur de sorte à focaliser les rayons lumineux vers le concentrateur secondaire (4).

3. Collecteur solaire selon la revendication 1 ou 2, **caractérisé en ce que** la structure de support (3) comporte une structure porteuse fixe (3a) et une structure d'accroche (3c) des miroirs (2), portée par la structure porteuse (3a), notamment de forme circulaire.

4. Collecteur solaire selon la revendication 3, **caractérisé en ce que** la structure d'accroche (3c) est mobile en rotation par rapport à la structure porteuse (3a).

5. Collecteur solaire selon la revendication 3 ou 4, **caractérisé en ce que** la structure de réception d'un flux de lumière concentré (4, 5) est portée par la structure d'accroche (3c), notamment de façon diamétralement opposée aux miroirs (2).

6. Collecteur solaire l'une quelconque des revendications précédentes, **caractérisé en ce que** la structure de support (3) comporte un support de maintien (3b) des miroirs (2) solidarisant tous les miroirs (2) entre eux, s'étendant notamment en partie médiane des miroirs (2).

7. Collecteur solaire selon l'une quelconque des revendications 2 à 6, **caractérisé en ce que** le tube récepteur (5) est monté mobile en rotation sur l'axe central (C) de l'éventail.

8. Collecteur solaire selon l'une quelconque des revendications précédentes, **caractérisé en ce que** chaque miroir (2) comporte une face pourvue d'un miroir (2a) orientée vers l'axe central (C) de l'éventail.

9. Collecteur solaire selon la revendication 8, **caractérisé en ce qu'**une première moitié (M1) des miroirs (2) présente des faces pourvues de miroirs (2a) orientées vers un côté du plan médian (P) passant par l'axe central (C) de l'éventail, et **en ce qu'**une deuxième moitié (M2) des miroirs (2) présente des faces pourvues de miroirs (2a) orientées vers l'autre côté du plan médian (P).

10. Collecteur solaire selon l'une quelconque des revendications précédentes, **caractérisé en ce que** les miroirs (2) sont de forme sensiblement rectangulaire.

11. Centrale solaire, **caractérisée en ce qu'**elle comporte une pluralité de collecteurs solaires (1) selon l'une quelconque des revendications précédentes.
